# EUROPEAN PATENT SPECIFICATION

(11) **EP 1 557 561 B1**
(45) Date of publication and mention of the grant of the patent: **06.12.2017**
(21) Application number: 03738607.5
(22) Date of filing: 01.07.2003
(51) Int. Cl.: F02P 15/12, F02N 3/04, F02P 3/08

(54) **BOOSTER POWER SUPPLY FOR ENGINE GENERATOR AND ITS CONTROLLING METHOD**
VERSTÄRKUNGSSTROMVERSORGUNG FÜR MOTORGENERATOR UND STEUERVERFAHREN DAFÜR
ALIMENTATION D'APPOINT POUR GÉNÉRATEUR ET PROCÉDÉ DE COMMANDE ASSOCIÉ

(30) Priority: 03.07.2002 JP 2002194897
(43) Date of publication of application: 27.07.2005
(73) Proprietor: SHINDENGEN ELECTRIC MANUFACTURING CO., LTD., Tokyo, 100-0004 (JP)
(72) Inventor: TAKASHIMA, Toyotaka, Hanno-shi, Saitama 357-8585 (JP); NIIZEKI, Seiji, Hanno-shi, Saitama 357-8585 (JP)
(74) Representative: Henkel, Breuer & Partner
(86) International application number: PCT/JP2003/008358
(87) International publication number: WO 2004/005705

(56) References cited:
- EP-A- 1 235 342
- JP-A- 1 224 474
- JP-A- 3 036 958
- JP-A- 3 036 958
- JP-A- 4 132 877
- JP-A- 4 132 877
- JP-A- 6 229 312
- JP-A- 6 229 312
- JP-A- 10 089 211
- JP-A- 51 132 339
- JP-A- 58 143 165
- JP-A- 58 143 165
- JP-A- 2002 101 697
- JP-U- 61 051 483
- US-A- 5 404 859

## Description

### TECHNICAL FIELD

The present invention relates to a voltage booster for engine generator and control method thereof.

### BACKGROUND ART

Conventionally, a motor bicycle uses as an engine start ignition circuit the CDI (capacitor discharge igniter) method and the full transistor igniter method. Here, the CDI can operate regardless of presence/absence of a battery and can perform engine start by a so-called kick method. However, the CDI has a problem that it is inferior to the full transistor igniter method when igniting a dilute air-fuel mixture. Moreover, the full transistor igniter method is appropriate for energy saving such as optimal ignition control of engine but requires a battery and cannot start an engine by the kick method.

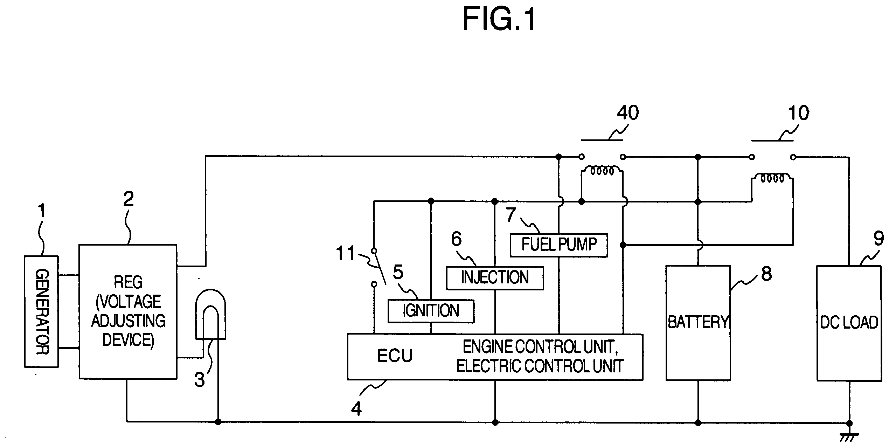

Explanation will be given on an outline of the conventional full transistor igniter circuit with reference to Fig. 1. The full transistor igniter circuit includes a generator 1, a voltage adjusting unit 2, a battery 8, a lamp 3, an engine control unit (ECU) 4, an igniter 5, an injector 6, a fuel pump 7, and other DC load 9 connected in parallel. In this conventional full transistor igniter circuit, when a main switch 11 is such as a starter button is closed, voltage from the battery 8 is supplied to the entire circuit to operate the ECU 4 and relays 10, 40 are closed to start the engine. However, even if the generator 1 is provided with means of the kick method as a countermeasure when the battery is dead, the low rotation of the generator 1 obtained by the kick cannot supply stable voltage to electronic parts such as the ECU 4 from the voltage adjusting unit 2. As a result, in the conventional full transistor igniter method, the engine start by the kick method is extremely difficult and substantially cannot start drive.

An engine start ignition circuit according to the precharacterizing part of claim 1 is known from EP 1 235 342 A. Further relevant State of the Art is disclosed in US 5 404 859 A and JP 01 224474 A.

### DISCLOSURE OF THE INVENTION

It is therefore an object of the present invention to provide a voltage booster for engine generator capable of starting engine by the so-called kick method and control method thereof.

According to the present invention the above object is achieved by an engine start ignition circuit according to claim 1. The dependent claims are directed to different advantageous aspects of the invention.

### BRIEF DESCRIPTION OF THE DRAWINGS

Fig. 1 shows an outline of an engine ignition circuit of the conventional full transistor igniter method.
Fig. 2 shows configuration of a voltage booster for engine generator according to an example of the present invention.
Fig. 3 shows detailed configuration of a DC/DC converter in Fig. 2.
Fig. 4 shows detailed configuration of a DC/DC converter according to another embodiment.
Fig. 5 shows detailed configuration of a DC/DC converter according to still another example.
Fig. 6 shows detailed configuration of a DC/DC converter according to yet another embodiment.
Fig. 7 shows detailed configuration of a DC/DC converter according to still yet another embodiment.

### BEST MODE FOR CARRYING OUT THE INVENTION

Description will now be directed to a voltage booster for engine generator and control method thereof according to embodiments of the present invention with reference to the attached drawings.

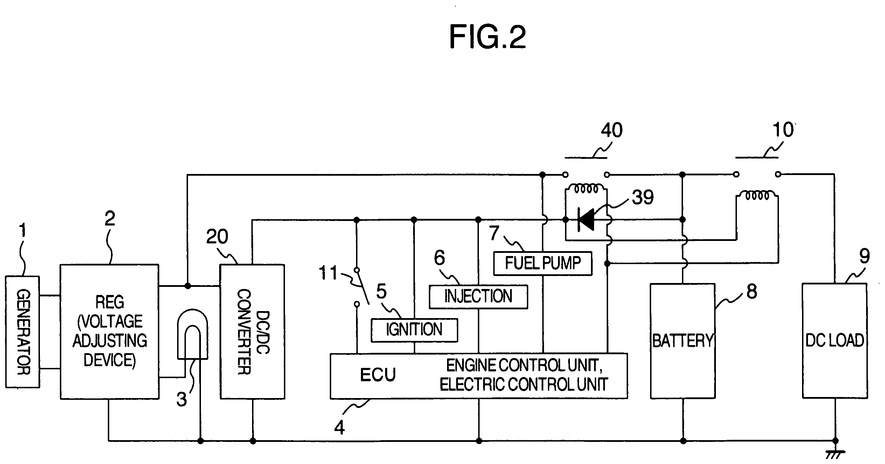

Fig. 2 shows the entire configuration of the voltage booster for engine generator according to the present invention. Like components as in the conventional example shown in Fig. 1 are denoted by like reference symbols and their detailed explanations are omitted. The voltage booster for engine generator of Fig. 2 is characterized in that the DC/DC converter 20 is connected as an active booster circuit between the voltage adjustment unit (REG) 2 and the electronic device such as the ECU 4 connected to the REG 2 to receive voltage. Moreover, the battery 8 shown in the figure is in the discharge state below a predetermined start voltage upon start by the kick method as an object of the present invention and it is assumed that the generator 1 is driven by the so-called kick method. After the engine reaches a stationary rotation, the battery 8 is charged and afterwards, the engine can be started by the battery 8. Moreover, in the circuit shown in Fig. 2, a diode 39 is inserted between the DC/DC converter 20 and the battery 8, so as to prevent flow in of current to the side of the battery 8 having a large current capacity upon boosting of the DC/DC converter 20.

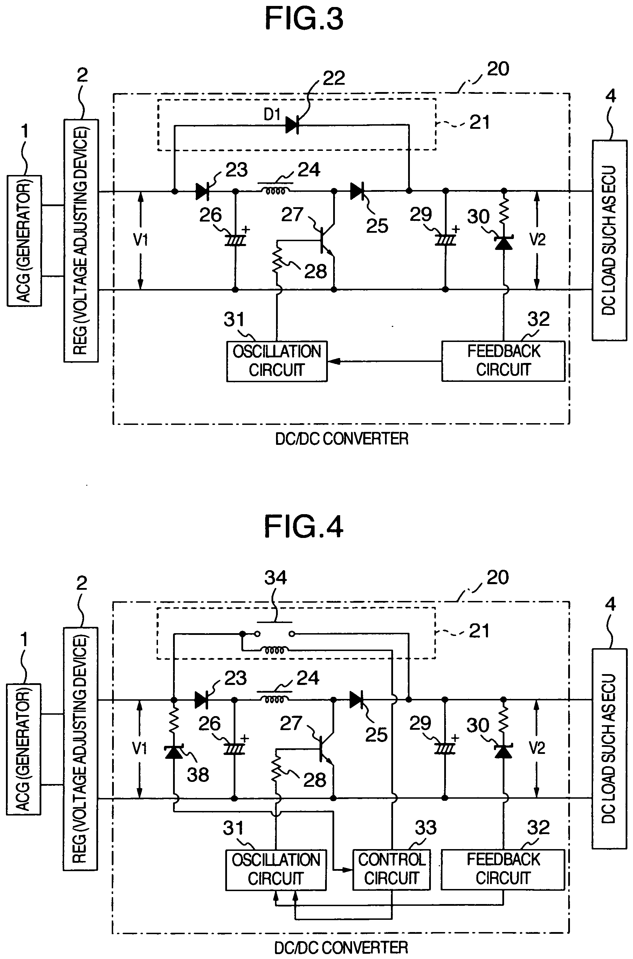

Furthermore, Fig. 3 shows detailed configuration of this DC/DC converter 20. In Fig. 3, the DC/DC converter basically consists of a diode 23, a coil 24, and a diode 25 which are connected in series and a capacitor 26, a transistor 27, and a capacitor 30 which are connected between the series connection and the ground line.

Furthermore, in addition to this basic structure, a bypass circuit 21 consisting of a diode 22 connected in parallel between the diodes 23 and 25 is provided. Furthermore, a feedback circuit 32 including a Zener diode 30 is arranged. Furthermore, the output of the feedback circuit 32 is connected to an oscillation circuit 31. This oscillation circuit 31 is configured so as to supply a drive signal to the base of the transistor 27 via a resistor 28.

In the DC/DC converter 20 having such a configuration, the control voltage V1 of the REG 2 (output fluctuating depending on the rpm of the generator) is compared to the control voltage V2 of the DC/DC converter 20 (a reference voltage such as 12V at which the engine performs stationary rotation and the electronic devices operate normally). That is, when the control voltage V1 of the REG 2 by a low rpm at rotation start by turning on the main switch 11 and kicking the ACG 1 is lower than the control voltage V2 of the DC/DC converter 20 (V1 < V2), the voltage value passing through the bypass circuit 21 and subtracted by the voltage drop by the diode 22 (V1 - voltage drop of diode) is applied. The voltage value detected is input to the feedback circuit 32 and the relationship of V1 < V2 is recognized. The feedback circuit outputs a feedback signal corresponding to the difference between the V1 and V2 to the oscillation circuit 31 so as to drive the oscillation circuit 31. The oscillation circuit 31 sends a corresponding drive signal to the base of the transistor 27 via the resistor 28. Thus, the transistor 27 is conducted/controlled and the DC/DC converter 20 operates to boost the voltage from the current V1 to the control voltage V2 which is a reference voltage.

When the reference voltage V2 boosted by the DC/DC converter 20 is output, the ECU 4 operates and the engine starts operation. With this engine start, the ACG 1 is driven by the engine to increase the rpm. When the ACG 1 reaches the stationary rotation, the voltage applied to the Zener diode 30 via the bypass circuit 21 is increased step by step to a value equal to or above V2 when subtracted by the voltage drop of the diode 22. At this moment, a voltage equal to or above 2V which is the preset output of the DC/DC convert 20 is detected by the feedback circuit 32 (V1 > V2) .

Then, the feedback circuit 32 transmits a feedback signal so as to stop drive output of the oscillation circuit 31 to the transistor 27. The boosting operation of the DC/DC converter 20 stops. The control voltage V1 of the REG 2 which has become equal to or above the control voltage V2 of the DC/DC converter 20 is bypassed by the diode 22 of the bypass circuit 21 and supplied dto the electronic circuits such as the ECU 4. Furthermore, the relays 10, 40 are closed and a reference voltage is applied to the DC load 9, thereby starting charge of the battery 8.

After this, the engine performs stationary rotation and the ACG 1 generates above the nominal output. In the REG 2, the output voltage of the stationary operation is obtained and supplied via the bypass circuit 21 to the ECU 4 and other electronic devices. In the embodiment shown in Fig. 3, the bypass circuit 21 is composed of a diode but it can also be replaced by a resistor. Moreover, the oscillation circuit 31 may be configured to oscillate stationary drive frequency such as 50 KHz and cut off the DC/DC converter circuit by the relay using a signal of the feedback circuit 32 instead of using control of PWM and PFM.

Next, explanation will be given on the DC/DC converter 20 of Fig. 4 according to another embodiment. In this embodiment, the bypass circuit 21 is composed of a relay 34 and a control circuit 34 is provided to operate the relay 34. This control circuit 33 includes a Zener diode 38 for monitoring voltage V1 arranged at the input side of the DC/DC converter 20. When the control voltage V1 of the REG 2 has become greater than the control output V2 of the DC/DC converter 20 (V1 > V2), the relay 34 is turned on, oscillation of the oscillation circuit 31 stops, and the DC/DC converter 20 is bypassed by the bypass circuit 21. When the relay 34 is closed by the operation of the control circuit 33, the voltage change of V1 > V2 is detected by the feedback circuit 32 and boosting operation of the DC/DC convert 20 is terminated. Moreover, this control circuit 33 may be replaced by a timer circuit controlling ON/OFF of the relay 34 after a sufficient time when the V1 becomes greater than V2 after the start by the kick method, or may be replaced by a switching element such as a transistor. Moreover, it is possible to turn ON/OFF when the value of V1 reaches the stationary rotation value regardless of the value of V2.

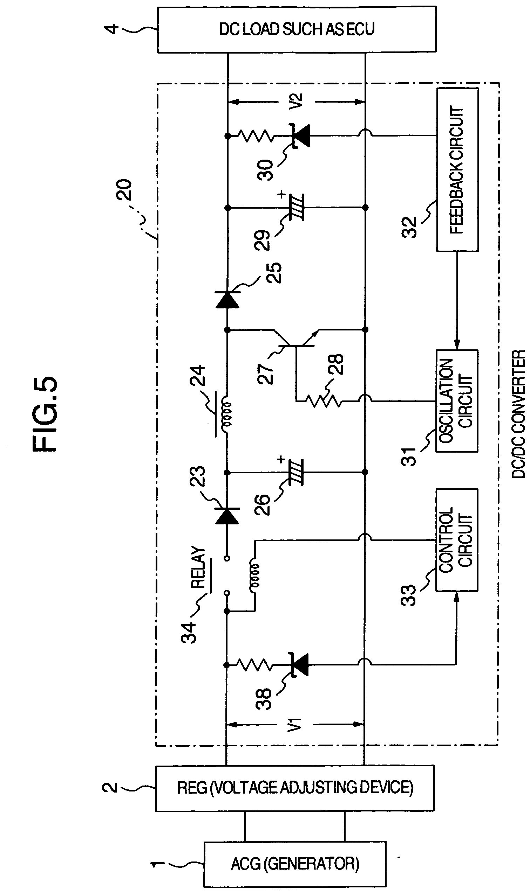

Furthermore, in the example of Fig. 5, a relay 34 is provided at the input side of the diode 23 instead of the bypass circuit 21, so as to be operated by the control circuit 33 similar to the one in Fig. 4. In this configuration, the engine is normally started by the kick when the relay 34 is closed. When the control voltage V1 of the REG 1 has become equal to or greater than the control voltage V2 of the DC/DC converter 20 (V1 ≥ V2), the control circuit 33 operates to open the relay 34, so that the DC/DC converter 20 itself enters a stop state. As shown in Fig. 2, V1 equal to or greater than V2 is supplied to the electronic devices such as ECU 5 connected in parallel to the REG 2 and the operation is maintained. In the embodiment of Fig. 5 also, the control circuit 33 monitors the control voltage V2 of the DC/DC converter, or it may be replaced by a timer operating after a lapse of a predetermined period of time. The relay may be replaced by the switching element such as a transistor. Moreover, after the relay 34 is opened and the boosting operation of the DC/DC converter 20 stops, the engine performs the stationary operation and the stationary voltage from the REG 2 obtained by the stationary operation of the engine closes the relay 10, so that the stationary voltage is applied to all the circuit components shown in Fig. 2. In this configuration also, it is possible to employ a relay operating upon voltage of the stationary rotation regardless of the value of V2.

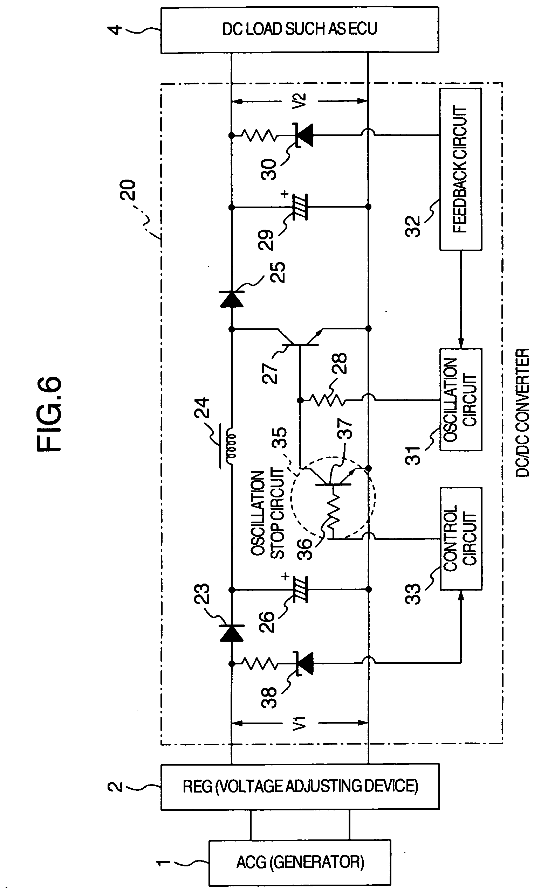

Furthermore, in the embodiment shown in Fig. 6, the oscillation circuit 31 boosts the control voltage V1 from the REG 2 to a predetermined voltage V2 by the feedback signal from the feedback circuit 32. Furthermore, an oscillation circuit 35 consisting of a resistor 36 and a transistor 37 is provided for terminating the operation of the transistor 27. This oscillation stop circuit 35 is controlled by a control circuit 33 having a Zener diode 38 for detecting the voltage V1 of the input side of the DC/DC converter 20. The control circuit 33 terminates the operation of the transistor 27 under the condition of V1 ≥ V2 in the same way as the embodiment of Fig. 3 and substantially terminates the operation of the DC/DC converter 20. In this embodiment also, the control circuit 33 may directly monitor the voltage V1 or timer operation can be used to terminate the oscillation stop circuit 35. In this configuration also, it is possible to employ a relay operating upon a voltage of stationary rotation regardless of the value of V2.

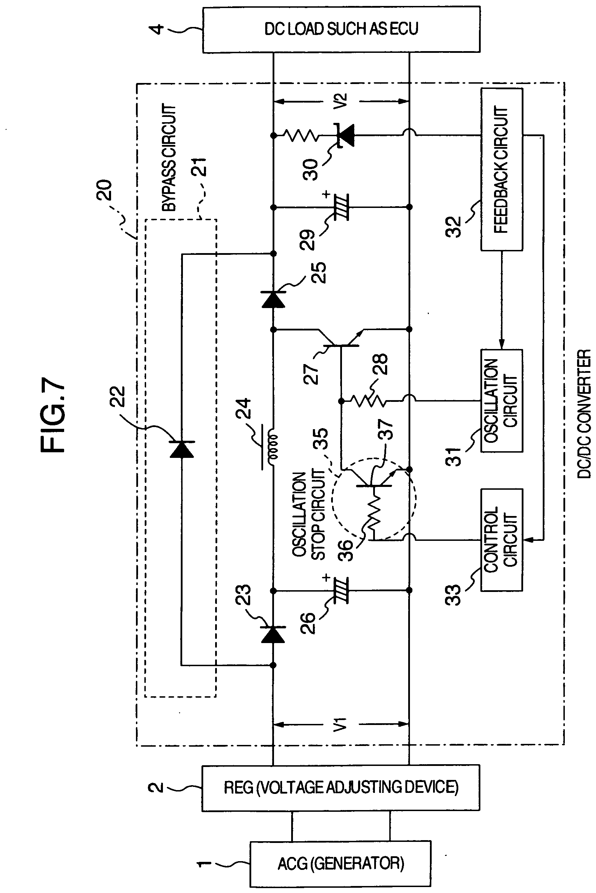

Furthermore, in the embodiment shown in Fig. 7, as compared to the embodiment of Fig. 3, the oscillation circuit 31 performs feedback control by the feedback circuit 32 and a bypass circuit 21 consisting of a diode 22 is provided in parallel. In the same way as the embodiment of Fig. 3, the feedback circuit 32 monitors the control voltage V1 of the REG 2 and upon detection of V1 > V2, the control circuit 33 operates the oscillation stop circuit 35. Thus, after stop of bossing operation of the DC/DC converter 20, the engine performs stationary operation and the stationary voltage from the REG 2 operates the oscillation stop circuit 35, so that the stationary voltage is applied to all the circuit components shown in Fig. 2. Furthermore, in this configuration also, it is possible to use an oscillation stop circuit operating upon a voltage of the stationary rotation regardless of the value of V2.

### INDUSTRIAL APPLICABILITY

As has been described above, the voltage booster for engine generator and control method thereof according to the present invention enables the engine ignition circuit of the full transistor igniter method to start the engine by the so-called kick method even when the battery is in a discharge state.

## Claims

1. An engine start ignition circuit including a voltage booster for an engine generator which is an engine ignition apparatus of the full transistor igniter method, the engine start ignition circuit comprises:
a generator (1) which can be driven by the kick method,
a voltage adjusting device (2) connected to the generator (1) for adjusting a voltage of power supplied from the generator (1),
an electronic device (4) connected to the voltage adjusting device (2) for controlling ignition/operation control of the engine by voltage supplied from the voltage adjusting device (2), and
an active boosting circuit (20) connected between the voltage adjusting device (2) and the electronic device (4), for boosting the output voltage of the voltage adjusting device (2) to a predetermined nominal voltage of the electronic device (4) upon the engine start by kicking the generator (1) when the power supply is lower than the predetermined engine stationary operation, and stopping the boosting operation when the output voltage from the voltage adjusting device (2) has become the predetermined nominal voltage of the engine stationary operation, wherein said active boosting circuit (20) further includes a capacitor for charging electromotive force at least by said kick, wherein
said active boosting circuit (20) is a DC/DC converter having a feedback circuit (32) for performing feedback so that the voltage of the output side becomes the predetermined nominal voltage, wherein
said capacitor is inserted between said feedback circuit and said output side, **characterised in that**
said active boosting circuit (20) further comprises a bypass circuit (21) for bypassing from the generator side to the load side of the active boosting circuit (20), and
wherein the feedback circuit (32) stops boosting operation of the DC/DC converter (20) when a voltage V1 of the generator side bypassed to the load side of the DC/DC converter (20), which is reduced by a voltage drop of the bypass circuit, exceeds a predetermined nominal voltage V2 (V1 - voltage drop of bypass circuit > V2).

2. An engine start ignition circuit as claimed in Claim 1, wherein:
the bypass circuit (21) has a relay (34) which is normally open for bypassing from the generator side to the load side of the active boosting circuit (20), and
said active boosting circuit (20) further includes a control circuit (33) for detecting the voltage of the generator side of the active boosting circuit (20) and closing the relay (34) which is normally open, and
wherein the control circuit (33) is configured for closing the relay (34) so as to stop the boosting operation of the DC/DC converter (20), at the moment when the voltage V1 of the generator side has become a predetermined voltage from the voltage adjusting device (2) during the stationary operation, the control circuit (33) closes.

3. An engine start ignition circuit as claimed in Claim 2, wherein the moment of the predetermined voltage is a moment when the predetermined nominal voltage V2 exceeds (V1 > V2), and the relay (34) is closed at this moment, and the feedback circuit stops the boosting operation of the DC/DC converter I(20) when the voltage V1 of the generator side bypassed by the load side of the DC/DC converter exceeds the predetermined nominal voltage (V1 > V2).

4. An engine start ignition circuit as claimed in Claim 1, wherein the active boosting circuit includes:
a relay (34) which is provided at the generator side and normally closed, and
a control circuit (33) for operating the relay (34) according to the voltage V1 at the generator side of the active boosting circuit (20),
and the control circuit (33) opens the relay (34) at the moment when the voltage V1 of the generator side has become a predetermined voltage from the voltage adjusting device (2) during stationary operation so as to stop the boosting operation of the DC/DC converter (20).

5. A engine start ignition circuit as claimed in Claim 4, wherein the moment when the predetermined voltage is obtained is the moment when the voltage has become equal to or above the nominal voltage V2 (V1 ≥ V2) and at this moment the relay (34) is opened.

6. A engine start ignition circuit as claimed in Claim 5, wherein the control circuit is configured for stopping an oscillation stop circuit (31) and the boosting operation of the DC/DC converter (20) at the moment when the voltage V1 of the generator side has become a predetermined voltage from the voltage adjusting device (2) during the stationary operation.

7. An engine start ignition circuit as claimed in Claim 6, wherein the moment when the predetermined voltage is obtained is the moment when the voltage is equal to or above the nominal voltage (V1 >= V2) and at this moment operation of the DC/DC converter (20) is stopped.

8. An engine start ignition circuit as claimed in Claim 1, wherein, when the DC/DC converter has a voltage V2 (V1 >= V2), at this moment the relay is a feedback circuit for performing feedback so that the voltage of the output side becomes the predetermined nominal voltage V2, and
wherein the engine start ignition circuit further comprises
a control circuit (33) for terminating operation of the active boosting circuit by the output of the feedback circuit (32), and
at the moment when the voltage V1 of the input side bypassed to the output side has become a predetermined voltage from the voltage adjusting device (2) during the stationary operation, the feedback circuit stops the boosting operation of the DC/DC converter (20).

9. An engine start ignition circuit as claimed in Claim 8, wherein the predetermined moment is the moment when the voltage has exceeded the nominal voltage V2 and at this moment boosting operation of the DC/DC converter (20) is stopped by controlling the control circuit.

## Patentansprüche

1. Motorstart-Zündschaltung mit einem Spannungsverstärker für einen Motorgenerator, welcher eine Motorzündvorrichtung des Volltransistor-Zündverfahrens ist, wobei die Motorstart-Zündschaltung aufweist:
einen Generator (1), welcher durch das Kick-Verfahren angetrieben werden kann,
eine Spannungseinstellungsvorrichtung (2), die mit dem Generator (1) verbunden ist, um eine Spannung einer von dem Generator (1) zugeführten Energie einzustellen,
eine elektronische Vorrichtung (4), die mit der Spannungseinstellungsvorrichtung (2) zum Steuern einer Zünd-/Betriebssteuerung des Motors durch eine von der Spannungseinstellungsvorrichtung (2) angelegte Spannung verbunden ist, und
eine aktive Verstärkungsschaltung (20), die zwischen der Spannungseinstellungsvorrichtung (2) und der elektronischen Vorrichtung (4) geschaltet ist, zum Verstärken der Ausgangsspannung der Spannungseinstellungsvorrichtung (2) auf eine vorbestimmte Nominalspannung der elektronischen Vorrichtung (4) auf den Maschinenstart hin, indem der Generator (1) angetrieben wird, wenn die Energiezufuhr niedriger als der vorbestimmte stationäre Motorbetrieb ist, und der Verstärkungsbetrieb gestoppt wird, wenn die Ausgangsspannung von der Spannungseinstellungsvorrichtung (2) zu der vorbestimmten Nominalspannung des stationären Motorbetriebs geworden ist, wobei die aktive Verstärkungsschaltung (20) ferner einen Kondensator zum Laden einer elektromotorischen Kraft zumindest durch das Antreiben umfasst, wobei
die aktive Verstärkungsschaltung (20) ein DC/DC-Umwandler ist, der eine Rückkopplungsschaltung (32) zum Durchführen einer Rückkopplung aufweist, sodass die Spannung der Ausgangsseite zu der vorbestimmten Nominalspannung wird, wobei
der Kondensator zwischen der Rückkopplungsschaltung und der Ausgangsseite eingefügt ist,
**dadurch gekennzeichnet, dass**
die aktive Verstärkungsschaltung (20) ferner eine Überbrückungsschaltung (21) zum Überbrücken von der Generatorseite zu der Lastseite der aktiven Verstärkungsschaltung (20) aufweist, und
wobei die Rückkopplungsschaltung (32) einen Verstärkungsbetrieb des DC/DC-Umwandlers (20) stoppt, wenn eine Spannung V1 der zu der Lastseite des DC/DC-Umwandlers (20) überbrückten Generatorseite, welche um einen Spannungsabfall der Überbrückungsschaltung verringert ist, eine vorbestimmte Nominalspannung V2 übersteigt (V1 - Spannungsabfall von Überbrückungsschaltung > V2).

2. Motorstart-Zündschaltung nach Anspruch 1, wobei:
die Überbrückungsschaltung (21) ein Relais (34) aufweist, welches zum Überbrücken von der Generatorseite zu der Lastseite der aktiven Verstärkungsschaltung (20) normalerweise geöffnet ist, und
die aktive Verstärkungsschaltung (20) ferner eine Steuerungsschaltung (33) zum Erfassen der Spannung der Generatorseite der aktiven Verstärkungsschaltung (20) und Schließen des Relais (34), welches normalerweise geöffnet ist, umfasst, und
wobei die Steuerungsschaltung (33) konfiguriert ist, um das Relais (34) zum Stoppen des Verstärkungsbetriebs des DC/DC-Umwandlers (20) in dem Moment zu schließen, wenn die Spannung V1 der Generatorseite zu einer vorbestimmten Spannung von der Spannungseinstellungsvorrichtung (2) während des stationären Betriebs geworden ist, und die Steuerungsschaltung (33) schließt.

3. Motorstart-Zündschaltung nach Anspruch 2, wobei der Moment der vorbestimmten Spannung ein Moment ist, wenn die vorbestimmte Nominalspannung V2 überschritten wird (V1 > V2) und das Relais (34) in diesem Moment geschlossen ist, und die Rückkopplungsschaltung den Verstärkungsbetrieb des DC/DC-Umwandlers (20) stoppt, wenn die Spannung V1 der durch die Lastseite des DC/DC-Umwandlers überbrückten Generatorseite die vorbestimmte Nominalspannung überschreitet (V1 > V2).

4. Motorstart-Zündschaltung nach Anspruch 1, wobei die aktive Verstärkungsschaltung umfasst:
ein Relais (34), welches an der Generatorseite vorgesehen und normalerweise geschlossen ist, und
eine Steuerungsschaltung (33) zum Betreiben des Relais (34) gemäß der Spannung V1 an der Generatorseite der aktiven Verstärkungsschaltung (20),
wobei die Steuerungsschaltung (33) das Relais (34) in dem Moment öffnet, wenn die Spannung V1 der Generatorseite zu einer vorbestimmten Spannung von der Spannungseinstellungsvorrichtung (2) während des stationären Betriebs geworden ist, um den Verstärkungsbetrieb des DC/DC-Umwandlers (20) zu stoppen.

5. Motorstart-Zündschaltung nach Anspruch 4, wobei der Moment, wenn die vorbestimmte Spannung erhalten wird, der Moment ist, wenn die Spannung gleich oder größer als die Nominalspannung V2 geworden ist (V1 ≥ V2), und in diesem Moment wird das Relais (34) geöffnet.

6. Motorstart-Zündschaltung nach Anspruch 5, wobei die Steuerungsschaltung konfiguriert ist, um eine Oszillationsstoppschaltung (31) und den Verstärkungsbetrieb des DC/DC-Umwandlers (20) in dem Moment zu stoppen, wenn die Spannung V1 der Generatorseite zu einer vorbestimmten Spannung von der Spannungseinstellungsvorrichtung (2) während des stationären Betriebs geworden ist.

7. Motorstart-Zündschaltung nach Anspruch 6, wobei der Moment, wenn die vorbestimmte Spannung erhalten wird, der Moment ist, wenn die Spannung gleich oder größer als die Nominalspannung ist (V1 ≥ V2), und in diesem Moment wird der Betrieb des DC/DC-Umwandlers (20) gestoppt.

8. Motorstart-Zündschaltung nach Anspruch 1, wobei, wenn der DC/DC-Umwandler eine Spannung V2 (V1 ≥ V2) aufweist, das Relais in diesem Moment eine Rückkopplungsschaltung zum Durchführen einer Rückkopplung ist, sodass die Spannung der Ausgangsseite zu der vorbestimmten Nominalspannung V2 wird, und
wobei die Motorstart-Zündschaltung ferner aufweist:
eine Steuerungsschaltung (33) zum Beenden eines Betriebs der aktiven Verstärkungsschaltung durch die Ausgabe der Rückkopplungsschaltung (32), und
in dem Moment, wenn die Spannung V1 der zu der Ausgangsseite überbrückten Eingangsseite zu einer vorbestimmten Spannung von der Spannungseinstellungsvorrichtung (2) während des stationären Betriebs geworden ist, die Rückkopplungsschaltung den Verstärkungsbetrieb des DC/DC-Umwandlers (20) stoppt.

9. Motorstart-Zündschaltung nach Anspruch 8, wobei der vorbestimmte Moment der Moment ist, wenn die Spannung die Nominalspannung V2 überschritten hat, und in diesem Moment ein Verstärkungsbetrieb des DC/DC-Umwandlers (20) gestoppt wird, indem die Steuerungsschaltung gesteuert wird.

## Revendications

1. Circuit d'allumage de démarrage de moteur incluant un amplificateur de tension pour un générateur de moteur lequel correspond à un appareil d'allumage de moteur faisant appel au procédé d'allumage complètement transistorisé, dans lequel le circuit d'allumage de démarrage de moteur comporte :
un générateur (1) qui peut être commandé par le procédé de démarrage au pied ;
un dispositif de réglage de tension (2) connecté au générateur (1) pour régler une tension de puissance fournie par le générateur (1) ;
un dispositif électronique (4) connecté au dispositif de réglage de tension (2) pour commander une commande d'allumage/fonctionnement du moteur par la tension fournie par le dispositif de réglage de tension (2) ; et
un circuit d'amplification active (20) connecté entre le dispositif de réglage de tension (2) et le dispositif électronique (4), pour amplifier la tension de sortie du dispositif de réglage de tension (2) jusqu'à une tension nominale prédéterminée du dispositif électronique (4) lors du démarrage de moteur par un démarrage au pied du générateur (1) lorsque l'alimentation électrique est inférieure au fonctionnement stationnaire de moteur prédéterminé, et pour interrompre l'opération d'amplification lorsque la tension de sortie provenant du dispositif de réglage de tension (2) a atteint la tension nominale prédéterminée du fonctionnement stationnaire de moteur, dans lequel ledit circuit d'amplification active (20) inclut en outre un condensateur pour charger une force électromotrice au moins par ledit démarrage au pied, dans lequel
ledit circuit d'amplification active (20) est un convertisseur continu - continu présentant un circuit de rétroaction (32) destiné à mettre en oeuvre une rétroaction de sorte que la tension du côté de sortie devient la tension nominale prédéterminée, dans lequel
ledit condensateur est inséré entre ledit circuit de rétroaction et ledit côté de sortie, **caractérisé en ce que** :
ledit circuit d'amplification active (20) comporte en outre un circuit de dérivation (21) permettant une dérivation, du côté de générateur au côté de charge du circuit d'amplification active (20) ; et
dans lequel le circuit de rétroaction (32) interrompt l'opération d'amplification du convertisseur continu - continu (20) lorsqu'une tension V1 du côté de générateur dérivé vers le côté de charge du convertisseur continu - continu (20), qui est réduite par une chute de tension du circuit de dérivation, est supérieure à une tension nominale prédéterminée V2 (V1 - chute de tension de circuit de dérivation > V2).

2. Circuit d'allumage de démarrage de moteur selon la revendication 1, dans lequel :
le circuit de dérivation (21) dispose d'un relais (34) qui est normalement ouvert pour la dérivation du côté de générateur au côté de charge du circuit d'amplification active (20) ; et
ledit circuit d'amplification active (20) comporte en outre un circuit de commande (33) pour détecter la tension du côté de générateur du circuit d'amplification active (20) et fermer le relais (34) qui est normalement ouvert ; et
dans lequel le circuit de commande (33) est configuré de manière à fermer le relais (34) de manière à interrompre l'opération d'amplification du convertisseur continu - continu (20), au moment où la tension V1 du côté de générateur est devenue une tension prédéterminée, à partir du dispositif de réglage de tension (2), au cours du fonctionnement stationnaire, de sorte que le circuit de commande (33) se ferme.

3. Circuit d'allumage de démarrage de moteur selon la revendication 2, dans lequel le moment de la tension prédéterminée correspond à un moment où la tension nominale prédéterminée V2 est dépassée (V1 > V2), et dans lequel le relais (34) est fermé à ce moment, et dans lequel le circuit de rétroaction interrompt l'opération d'amplification du convertisseur continu - continu I (20) lorsque la tension V1 du côté de générateur dérivé par le côté de charge du convertisseur continu - continu dépasse la tension nominale prédéterminée (V1 > V2).

4. Circuit d'allumage de démarrage de moteur selon la revendication 1, dans lequel le circuit d'amplification active inclut :
un relais (34) qui est fourni au niveau du côté de générateur et qui est normalement fermé ; et
un circuit de commande (33) destiné à faire fonctionner le relais (34) selon la tension V1 au niveau du côté de générateur du circuit d'amplification active (20) ; et
dans lequel le circuit de commande (33) ouvre le relais (34) au moment où la tension V1 du côté de générateur est devenue une tension prédéterminée, à partir du dispositif de réglage de tension (2), au cours du fonctionnement stationnaire, afin d'interrompre l'opération d'amplification du convertisseur continu - continu (20).

5. Circuit d'allumage de démarrage de moteur selon la revendication 4, dans lequel le moment où la tension prédéterminée est obtenue correspond au moment où la tension est devenue égale ou supérieure à la tension nominale V2 (V1 ≥ V2), et dans lequel, à ce moment, le relais (34) est ouvert.

6. Circuit d'allumage de démarrage de moteur selon la revendication 5, dans lequel le circuit de commande est configuré de manière à interrompre un circuit d'arrêt d'oscillation (31) et l'opération d'amplification du convertisseur continu - continu (20) au moment où la tension V1 du côté de générateur est devenue une tension prédéterminée, à partir du dispositif de réglage de tension (2), au cours du fonctionnement stationnaire.

7. Circuit d'allumage de démarrage de moteur selon la revendication 6, dans lequel le moment où la tension prédéterminée est obtenue correspond au moment où la tension est égale ou supérieure à la tension nominale (V1 ≥ V2), et dans lequel, à ce moment, le fonctionnement du convertisseur continu - continu (20) est interrompu.

8. Circuit d'allumage de démarrage de moteur selon la revendication 1, dans lequel, lorsque le convertisseur continu - continu présente une tension V2 (V1 ≥ V2), à ce moment, le relais correspond à un circuit de rétroaction destiné à mettre en oeuvre une rétroaction de sorte que la tension du côté de sortie devient la tension nominale prédéterminée V2 ; et
dans lequel le circuit d'allumage de démarrage de moteur comporte en outre :
un circuit de commande (33) pour mettre fin au fonctionnement du circuit d'amplification active par la sortie du circuit de rétroaction (32) ; et
au moment où la tension V1 du côté d'entrée dérivé par le côté de sortie est devenue une tension prédéterminée, à partir du dispositif de réglage de tension (2), au cours du fonctionnement stationnaire, le circuit de rétroaction interrompt l'opération d'amplification du convertisseur continu - continu (20) .

9. Circuit d'allumage de démarrage de moteur selon la revendication 8, dans lequel le moment prédéterminé correspond au moment où la tension a dépassé la tension nominale V2, et dans lequel, à ce moment, l'opération d'amplification du convertisseur continu - continu (20) est interrompue en commandant le circuit de commande.
